# EUROPEAN PATENT SPECIFICATION

(11) **EP 3 080 996 B1**
(45) Date of publication and mention of the grant of the patent: **10.10.2018**
(21) Application number: 15798977.3
(22) Date of filing: 04.05.2015
(51) Int. Cl.: H04N 21/43, H04N 5/445, G06F 17/30

(54) **APPARATUS AND METHOD FOR PROVIDING INFORMATION**
VORRICHTUNG UND VERFAHREN ZUR BEREITSTELLUNG VON INFORMATIONEN
APPAREIL ET PROCÉDÉ DE FOURNITURE D'INFORMATIONS

(30) Priority: 27.05.2014 KR 20140063647
(43) Date of publication of application: 19.10.2016
(73) Proprietor: Samsung Electronics Co., Ltd., Suwon-si, Gyeonggi-do 16677 (KR)
(72) Inventor: KIM, Seung-won, Gwangju-si Gyeonggi-do 464-807 (KR); SHIN, Seung-min, Seoul 153-784 (KR); SHIN, Yong-wook, Hwaseong-si Gyeonggi-do 445-793 (KR); LEE, Yong-hoon, Yongin-si Gyeonggi-do 446-916 (KR); CHOI, Dong-hyun, Suwon-si Gyeonggi-do 443-848 (KR)
(74) Representative: Appleyard Lees IP LLP
(86) International application number: PCT/KR2015/004470
(87) International publication number: WO 2015/182893

(56) References cited:
- WO-A2-02/11446
- US-A1- 2006 212 897
- US-A1- 2006 259 473
- US-A1- 2008 266 449
- US-A1- 2010 279 667
- US-A1- 2013 246 463
- US-A1- 2013 317 910
- US-A1- 2014 101 123

## Description

### Technical Field

Apparatuses and methods consistent with one or more exemplary embodiments relate to an apparatus, a method, and a system for providing information, and more particularly, to an electrical apparatus, a method, and a system for predicting information belonging to an object of interest of a user and providing the predicted information.

### Background Art

Generally, a display apparatus provides information belonging to an object of interest of a user based on interest information which is predetermined by the corresponding user.

However, a typical display apparatus provides only information belonging to the object of interest that is predetermined by the user, and, therefore, when additional information based on the interest information predetermined by the user may be provided or there is no predetermined interest information, information of interest may not be provided to the user.

For example, when a user watches a baseball game, a display apparatus in the related art may provide game related information such as a baseball game schedule based on viewing history information of the user, but does not provide expanded information such as a team record or information about a specific baseball player in whom the user is interested.

That is, a related art display apparatus may provide some information belonging to the object of interest predetermined by the user, but is limited in predicting information in which the user is interested based on the information predetermined by the user and providing the predicted information.

In addition, a related display apparatus provides the information belonging to the object of interest of the user without considering user's present situation, environment, and the like, and the user's interest in the provided information is reduced.

International Patent Publication No. WO 02/11446 A2 discloses transcript triggers for video enhancement.

### Disclosure of Invention

### Technical Problem

The object of the invention is solved by the features of the independent claims. Further embodiments are the subject-matter of the dependent claims. One or more exemplary embodiments may overcome the above disadvantages and other disadvantages not described above. Also, one or more exemplary embodiments are not required to overcome all the disadvantages described above, and one or more exemplary embodiments may not overcome any of the problems described above.

One or more exemplary embodiments may predict additional information belonging to an object of interest of a user and preemptively provides the predicted additional information.

Further, one or more exemplary embodiments mat provide previously acquired additional information in consideration of user's present situation.

### Solution to Problem

According to an aspect of one or more exemplary embodiments, there is provided a method for providing information by an electrical apparatus, the method including: extracting at least one keyword from input source data; detecting context information corresponding to a user to whom the additional information is to be provided; determining at least one keyword corresponding to an object of interest of the user from among the extracted at least one keyword based on the detected context information; acquiring additional information corresponding to the determined at least one keyword; and outputting the acquired additional information.

The source data includes at least one from among data of a social network service (SNS), a web document, and video content, and the source data for the video content includes at least one of video data, audio data, and subtitles.

The detecting includes: recognizing identification information of the user; identify the user to whom the additional information is to be provided based on the recognized identification information; and detecting the context information of the identified user.

The context information includes at least one of: profile information of the user, preference information of the user, viewing history information of the user, surrounding environment information, search history information of the user, or reaction history information corresponding to the user's reaction to previously provided additional information, profile information, preference information, or viewing history information of other users corresponding to the user to whom the additional information is to be provided, and present time information.

The determining includes determining at least one of at least one frequently extracted keyword and at least one frequently searched for keyword from among the extracted at least one keyword as the at least one keyword corresponding to the object of interest of the user.

The acquiring includes: determining a search scheme for the additional information based on at least one of the determined at least one keyword, the detected context information, and characteristics of the extracted at least one keyword; and acquiring the additional information based on the determined search scheme.

The outputting includes: analyzing at least one of a genre of video content output from a terminal apparatus and an output state of the video content; and outputting, in response to, as a result of the analyzing, the genre of the video content being determined to be a first genre or an output duration time of the video content being determined to be greater than or equal to a threshold period of time, the additional information to another terminal apparatus registered in connection with the user.

The outputting further includes: outputting, in response to, as a result of the analyzing, the genre of the video content being determined to be a second genre, the user being recognized less than the threshold period of time, or the output duration time of the video content being determined to be less than the threshold period of time, voice data related to the additional information to the terminal apparatus.

The method further includes determining an operation state of the terminal apparatus, and the outputting of the additional information includes outputting, in response to determining that the terminal apparatus is in a deactivated state, the additional information to the another terminal apparatuses registered in connection with the user.

The outputting includes outputting the acquired additional information to a terminal apparatus, and the method further includes updating preference information included in the context information in response to a user selection command for the additional information being input to the terminal apparatus.

According to another aspect of one or more exemplary embodiments, there is provided an apparatus including: a communicator configured to communicate with a server to receive source data; an extraction unit configured to extract at least one keyword from the source data; a storage configured to store at least one context information corresponding to a user to whom additional information is to be provided; and a controller configured to: detect, from the storage, the at least one context information corresponding to the user, determine at least one keyword corresponding to an object of interest of the user from among the extracted at least one keyword based on the detected context information, acquire the additional information corresponding to the determined at least one keyword, and output the additional information.

The source data includes at least one of social network service (SNS) data, a web document, and data for video content, and the data for video content includes at least one of video data, audio data, and subtitles.

The controller is further configured to recognize identification information of the user, and identify the user based on the recognized identification information.

The context information includes at least one of: profile information of the user, preference information of the user, viewing history information of the user, surrounding environment information, search history information of the user, or reaction history information corresponding to the user's reaction to previously provided additional information, profile information, preference information, or viewing history information of other users corresponding to the user to whom the additional information is to be provided, and present time information.

The controller is further configured to determine at least one of at least one frequently extracted keyword and at least one frequently searched for keyword among the extracted at least one keyword as the at least one keyword corresponding to the object of interest of the user.

The controller is further configured to: determine a search scheme for the additional information based on the determined at least one keyword, the context information, and characteristics of the extracted at least one keyword, and acquire the additional information corresponding to the determined at least one keyword based on the determined search scheme.

The controller is further configured to: analyze at least one of a genre of video content output from a terminal apparatus and an output state of the video content, and output, as a result of the analyzing, in response to the genre of the video content being determined to be a first genre or an output duration time of the video content being determined to be greater than or equal to a threshold period of time, the additional information to another terminal apparatuses registered in connection with the user.

The controller is further configured to output, as a result of the analyzing, in response to the genre of the video content being determined to be a second genre, the user being recognized for less than the threshold period of time, or the output duration time of the video content being determined to be less than the threshold period of time, voice data related to the additional information to the terminal apparatus.

The controller is further configured to: determine an operation state of the terminal apparatus, and output, in response to determining that the terminal apparatus is in a deactivated state, the additional information to the another terminal apparatuses.

The controller is further configured to output the additional information to a terminal apparatus, and update, in response to a user selection command for the additional information being input to the terminal apparatus, preference information included in the context information.

According to still another aspect of one or more exemplary embodiments, there is provided a display apparatus including: a communicator configured to communicate with a server to receive source data; a display configured to output video content; an extraction unit configured to extract at least one keyword from the source data; a storage configured to store at least one context information on a user to whom additional information is to be provided; and a controller configured to: detect, from the storage, the at least one context information of the user, determine at least one keyword corresponding to an object of interest of the user from among the extracted at least one keyword based on the detected context information, acquire the additional information corresponding to the determined at least one keyword, and output the acquired additional information through the display.

According to still another aspect of one or more exemplary embodiments, there is provided an apparatus including: a transceiver; a storage configured to store context information corresponding to a user; and a controller configured to: control the transceiver to receive source data, extract at least one keyword from the source data, extract the context information corresponding to the user, determine at least one interest keyword from among the extracted at least one keyword based on the extracted context information, control the transceiver to acquire additional information based on the determined at least one interest keyword, and control the transceiver to output the additional information.

The controller is further configured to: identify the user, match the user to corresponding context information stored in the storage, extract the matched context information, and determine the at least one interest keyword based on the extracted matched context information.

The apparatus may further include a display, the source data may include video content, and the controller may be further configured to control the display to display the video content and the additional information.

The apparatus may further include a display, the source data may include video content, and the controller may be further configured to: control the display to display the video content, and control the transceiver to transmit the additional information to another display not included in the apparatus.

The controller is further configured to control the transceiver to transmit the source data to a first display and to transmit the additional information to a second display.

The controller is further configured to: control the transceiver to transmit the source data to a first display, determine a user concentration on the first display, and control the transceiver to transmit the additional information to the first display or a second display based on the user concentration.

The controller is further configured to control the transceiver to transmit, in response to the user concentration being determined to be low, the additional information to the first display, and transmit, in response to the user concentration being determined to be the user concentration is high, the additional information to the second display.

### Advantageous Effects of Invention

Additional and/or other aspects and advantages of one or more exemplary embodiments will be set forth in part in the description which follows and, in part, will be obvious from the description, or may be learned by practice of one or more exemplary embodiments.

### Brief Description of Drawings

The above and/or other aspects of one or more exemplary embodiments will be more apparent by describing certain exemplary embodiments with reference to the accompanying drawings, in which:
FIG. 1 is a block diagram of a system for providing information according to an exemplary embodiment;
FIG. 2 is a block diagram of an electrical apparatus according to an exemplary embodiment;
FIG. 3 is a block diagram of a display apparatus according to an exemplary embodiment;
FIG. 4 is a diagram illustrating providing additional information on video content from the display apparatus according to an exemplary embodiment;
FIG. 5 is a diagram illustrating providing video content belonging to an object of interest of a user from the display apparatus according to an exemplary embodiment;
FIG. 6 is a diagram illustrating providing product purchase information belonging to the object of interest of the user from the display apparatus according to an exemplary embodiment;
FIG. 7 is a diagram illustrating providing additional information on the video content belonging to the object of interest of the user from the display apparatus according to an exemplary embodiment;
FIG. 8 is a diagram illustrating providing additional information depending on characteristics of the video content belonging to the object of interest of the user from the display apparatus according to an exemplary embodiment;
FIG. 9 is a diagram illustrating providing additional information depending on characteristics of video content belonging to an object of interest of a user from a display apparatus according to another exemplary embodiment;
FIG. 10 is a diagram illustrating provision of additional information depending on the characteristics of the video content belonging to the object of interest of the user from the display apparatus according to another exemplary embodiment;
FIG. 11 is a diagram illustrating providing first additional information corresponding to user interest from the display apparatus in a standby mode according to an exemplary embodiment;
FIG. 12 is a diagram illustrating providing second additional information corresponding to user's interest from the display apparatus in a standby mode according to another exemplary embodiment;
FIG. 13 is a flow chart of a method for preemptively providing information corresponding to an object of interest of a user from the electrical apparatus according to an exemplary embodiment;
FIG. 14 is a flow chart for detecting user's context information from the electrical apparatus according to an exemplary embodiment; and
FIG. 15 is a flow chart of a method for outputting additional information associated with the object of interest of the user from the electrical apparatus according to an exemplary embodiment.

### Mode for the Invention

Hereinafter, one or more exemplary embodiments will be described in detail with reference to the accompanying drawings.

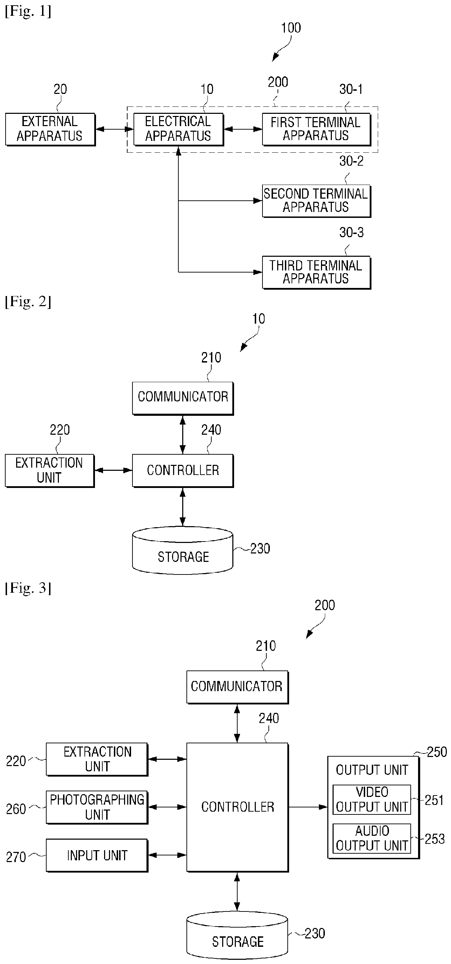

FIG. 1 is a block diagram of a system for providing information according to an exemplary embodiment.

As illustrated in FIG. 1, a system 100 which preemptively provides information corresponding to an object of interest of a user includes an electrical apparatus 10, a plurality of terminal apparatuses (hereinafter, first to third terminal apparatuses) 30-1 to 30-3, i.e., display apparatuses, and a server 20, i.e., an external server.

In this configuration, the electrical apparatus 10 is a repeater which performs communication with at least one of the first to third terminal apparatuses 30-1 to 30-3 and the server 20 and may be, for example, a set top box. Further, the first to third terminal apparatuses 30-1 to 30-3 are terminal apparatuses which may communicate through a wired connection or wirelessly and output video content, and may be, for example, a digital television (TV), a smart phone, a tablet personal computer (PC), and the like. Further, the server 20 may be at least one of a content providing server which provides video content, a web server which provides web documents, and a social network service (SNS) server which provides a social network service.

The electrical apparatus 10 performs data communication with the server 20, which provides the video content, the web document, the SNS, and the like, to transmit content requested by a user to at least one of the first to third terminal apparatuses 30-1 to 30-3. In addition, the electrical apparatus 10 may receive source data including at least one of data for video content which a user is watching, the web document, and the SNS from the server 20. Here, the data for video content may include at least one of video data, i.e., video, audio data, i.e., audio, and subtitle data, i.e., subtitles. When the source data is received from the server 20, the electrical apparatus 10 extracts a plurality of keywords from the received source data and determines keywords of interest from among the extracted plurality of keywords based on context information of a user to whom additional information services will be provided. Next, the electrical apparatus 10 acquires the additional information associated with predetermined keywords from the server 20 and transmits the acquired additional information to at least one of the first to third terminal apparatuses 30-1 to 30-3. The, at least one of the first to third terminal apparatuses 30-1 to 30-3 may output the additional information received from the electrical apparatus 10 as at least one of video and audio.

According to an exemplary embodiment, when a user is watching a baseball game through the first terminal apparatus 30-1, the electrical apparatus 10 extracts keywords associated with the baseball game from the source data received from the server 20. In detail, the electrical apparatus 10 extracts information related keywords on a topical player, such as an MVP of the last game, participating players, a player at bat, and the like, from source data for an SNS and a web document and source data including at least one of video, audio, and subtitles of the baseball game.

Further, the electrical apparatus 10 detects context information of a user to whom additional information services associated with previously extracted keywords will be provided. The context information may include at least one of profile information, preference information, viewing history information, surrounding environment information, such as people present, lighting, and noise level, search history information, and reaction history information to previously provided additional information of the user, profile information, preference information, and viewing history information of other users associated with the user to whom the additional information services are provided, and present time information. The context information may be stored in at least one of the electrical apparatus 10 and the first terminal apparatus 30-1 or may be acquired by at least one of the electrical apparatus 10 and the first terminal apparatus 30-1.

As described above, when baseball related keywords are extracted based on the source data received from the server 20, the electrical apparatus 10 may analyze a captured image of a user to determine a sex, age, and the like of the user based on context information for profile information of the user who is watching the baseball game. For example, when a user who is watching a baseball game is an adult male, the electrical apparatus 10 determines whether the user prefers the baseball game based on context information for preference information and viewing history information of the user. As a determination result, if it is determined that the user prefers the baseball game, the electrical apparatus 10 may determine an object field of interest of the user associated with the baseball game and may determine keywords belonging to the object field of interest from among the plurality of previously extracted keywords.

Next, the electrical apparatus 10 acquires the additional information associated with the predetermined keywords based on the context information for the preference information and the viewing history information of the user from the server 20 and transmits the acquired additional information to the first terminal apparatus 30-1. The first terminal apparatus 30-1 outputs the additional information transmitted from the electrical apparatus 10 as at least one of video and audio. Therefore, the user may receive a variety of information belonging to the object of interest in connection with the baseball game which the user is watching using the additional information output through the first terminal apparatus 30-1, without performing a separate search.

The electrical apparatus 10 transmitting the additional information to the first terminal apparatus 30-1 may additionally detect a user's concentration on a baseball game or context information such as an activation state of the first terminal apparatus 30-1. Therefore, when the concentration of the user on the baseball game displayed through the first terminal apparatus 30-1 is high or when the first terminal apparatus 30-1 is turned off, the electrical apparatus 10 may transmit the corresponding additional information to one of the second and third terminal apparatuses 30-2 and 30-3 in connection with the corresponding user. The second and third terminal apparatuses 30-2 and 30-3 may be pre-registered.

The electrical apparatus 10 which acquires the additional information corresponding to the object of interest of the user and transmits the acquired additional information to at least one of the first to third terminal apparatuses 30-1 to 30-3 may be included in a display apparatus 200 in combination with the first terminal apparatus 30-1.

FIG. 2 is a block diagram of an electrical apparatus according to an exemplary embodiment.

As illustrated in FIG. 2, the electrical apparatus 10 includes a communicator 210, i.e., a communication unit or a transceiver, an extraction unit 220, e.g., a processor or an extractor, a storage 230, i.e., a storage unit or a memory, and a controller 240, i.e., a control unit or a processor. The communicator 210 receives the source data from the server 20 using a wired and wireless communication scheme. In addition, the communicator 210 may perform data communication with at least one of the registered first to third terminal apparatuses 30-1 to 30-3 using the wired and wireless communication scheme to transmit the corresponding additional information to the object of interest of the user.

The server 20 may be at least one of the content providing server which provides the video content, the web server which provides a web document, and a social network service (SNS) server which provides the social network service. The source data received from the server 20 may be the web document, the SNS provided by the SNS server, or data for video content provided from the content providing server. Here, the data for video content may include at least one of video, audio, and subtitles.

Meanwhile, the communicator 210 may perform data communication with the server 20 and at least one of the first to third terminal apparatuses 30-1 to 30-3 using local area network (LAN), WAN, Ethernet, and the like. The communicator 210 may include various communication modules such as a near field communication module, a wireless communication module, and the like. The near field communication module performs short range communication with external devices in a wireless manner and may be implemented by at least one of a Bluetooth module, an infrared data association (IrDA) module, a near field communication (NFC) module, a WIFI module, and a Zigbee module. The wireless communication module is a module which is connected to an external network according to a wireless communication protocol such as WIFI and IEEE standards. In addition, the wireless communication module may further include a mobile communication module which is connected to a mobile communication network according to various mobile communication standards such as 3rd generation (3G), 3rd generation partnership project (3GPP), and long term evolution (LTE).

The extraction unit 220 extracts keywords from source data which are received through the communicator 210. According to one or more exemplary embodiments, when at least one of the first to third terminal apparatuses 30-1 to 30-3 output video content, the extraction unit 220 may extract a plurality of keywords associated with the corresponding video content from the data for the corresponding video content and the source data including the SNS and the web document. According to another exemplary embodiment, the extraction unit 220 may extract at least one of frequently detected keywords and frequently searched for keywords from the source data including the SNS and the web document as the keywords. In addition, the extraction unit 220 may extract, as keywords, trending information, newsworthy information, popular information, and user preference information from the source data including the SNS and the web document. The extraction unit 220 may be implemented as hardware, software, or a combination of hardware and software, such as a separate general or special purpose processor and a computer program.

The storage 230 stores at least one context information of the user. Here, the context information of the user may include at least one of the profile information, the preference information, and viewing history information, i.e., watching history, of the user. The profile information may be a name, an age, a sex, and the like of the user, the preference information may be preferred genre information, reaction history to previously provided additional information provided in connection with the keywords belonging to the object of interest of the user, keyword search history, and the like. Further, the viewing history information may be a viewing history, a viewing duration history, and the like for video content for various channels.

The controller 240 controls an operation of various components of the electrical apparatus 10. In particular, the controller 240 detects the context information of the user to whom the additional information services are to be provided from among multiple users stored in the storage 230. Here, the context information may include at least one of the profile information, the preference information, the viewing history information, and the present time information of the user to whom the additional information services will be provided and other users associated with the corresponding user. However, one or more exemplary embodiments are not limited thereto, and the context information may include all information which may be collected in connection with a surrounding environment of the user.

When the plurality of keywords are extracted from the source data, the controller 240 recognizes identification information of a user and may determine to which user the additional information services will be provided based on the recognized identification information. According to one or more exemplary embodiments, the controller 240 may identify a user based on at least one of an image which is captured by at least one of the first to third terminal apparatuses 30-1 to 30-3, a user's voice, and password information, and may determine or identify a user to whom the additional information service will be provided. As such, if the user to whom the additional information services will be provided is determined, the controller 240 may detect the context information of the user to whom the additional information services will be provided from among the context information for multiple users which is stored in the storage 230.

If the context information of the user to whom the additional information services will be provided is detected, the controller 240 determines the keywords associated with the object of interest from among a plurality of previously extracted keywords based on the detected context information. In this case, the controller 240 determines the keywords associated with the object of interest of the user based on the detected context information and may further determine at least one of the frequently detected keywords and frequently searched for keywords from among the plurality of keywords extracted by the extraction unit 220 as the keywords of the user.

Next, the controller 240 acquires and outputs the additional information associated with the predetermined keywords from the server 20. Here, the additional information may be processed information in connection with keywords associated with the object of interest of the user. In detail, the controller 240 determines a search scheme of the additional information on the corresponding keyword in connection with the context information of the user to whom the additional information services will be provided and the predetermined keyword. Next, the controller 240 controls the communicator 210 to receive the additional information associated with the keywords determined in connection with the object of interest of the user from the server 20 based on the determined search scheme. Therefore, the communicator 210 receives the additional information associated with the keywords determined in connection with the object of interest of the user from the server 20 and the controller 240 acquires additional information which is predicted to be preferred by the corresponding user.

According to an exemplary embodiment, the first to third terminal apparatuses 30-1 to 30-3 are registered in connection with the user to whom the additional information services will be provided. Among those, the first terminal apparatus 30-1 may be predetermined as a main terminal apparatus. When a soccer game related content is output from the first terminal apparatus 30-1 which is predetermined as the main terminal apparatus, the extraction unit 220 extracts a plurality of keywords from source data associated with the soccer game among the source data received from the server 20.

In detail, the extraction unit 220 extracts information related keywords on a player of interest, such as an MVP of the last game, participating players, players picked for a World Cup team, and the like, from the source data for SNS and a web document and source data including at least one of video of a soccer game, audio, and subtitles which are being output on the first terminal apparatus 30-1.

When the plurality of keywords associated with the soccer game are extracted from the source data, the controller 240 detects context information of a user to whom the additional information services will be provided among the stored context information for multiple users. In detail, the first terminal apparatus 30-1 may transmit identification information including at least one of an image of a user which is captured by a camera, a user's speech, password information, and viewing history information to the electrical apparatus 10. The controller 240 may determine who is watching the soccer game based on the identification information received from the first terminal apparatus 30-1 and may detect the context information of the corresponding user from the storage 230. Here, the context information may include at least one of profile information, preference information, and viewing history information of the user who is watching the soccer game. The controller 240 may detect context information of other users associated with the corresponding user and context information collected in connection with a current environment such as present time information.

When the context information associated with the user to whom the additional information services will be provided, i.e., the user watching the soccer game, is detected, the controller 240 may figure out sex, age, and the like of the user based on the profile information included in the context information of the corresponding user. For example, when the user is an adult male, the controller 240 determines whether the corresponding user prefers the soccer game based on the context information for preference information and viewing history information of the user. If it is determined that the corresponding user prefers the soccer game, the controller 240 determines the object field of interest of the user associated with the soccer game based on the preference information and the viewing history information of the user. That is, the controller 240 may determine the object field of interest, such as which soccer league the user enjoys watching, which soccer player the user has searched for, and the like, based on the preference information and the viewing history information of the user. For example, when the corresponding user mainly watches an English soccer league and games with Korean players, the controller 240 may determine an English league and a team with a Korean player among English teams as an object field of interest.

If the object field of interest is determined, the controller 240 may determine the keywords belonging to the corresponding object field among the plurality of previously extracted keywords as the keywords belonging to the object field of interest of the user. In addition, the controller 240 may determine at least one of frequently extracted keywords and keywords which are frequently searched for from among the plurality of previously extracted keywords as the keywords belonging to the object field of interest of the user. If the keywords are determined, the controller 240 may determine a search scheme of the additional information on the predetermined keywords and acquire the additional information on the predetermined keywords based on the determined search scheme from the server 20. Here, the search scheme may be a search scheme for providing additional information associated with the predetermined keywords. In detail, when the predetermined keyword is an information related keyword, the controller 240 may acquire the additional information having a dictionary definition associated with the corresponding keyword from the server 20, and, when the predetermined keyword is an issue related keyword, the controller 240 may acquire additional information of news articles associated with the corresponding keyword from the server 20. Meanwhile, when the predetermined keyword is a sport related keyword, the controller 240 may acquire corresponding sport related video additional information and, when the predetermined keyword is a location related keyword, may acquire location information associated with the corresponding keyword and additional information of surrounding locations from the server 20.

When the additional information is acquired, the controller 240 controls the communicator 210 to output the previously acquired additional information from the terminal apparatus associated with the user to whom the additional information service is provided among the first to third terminal apparatuses 30-1 to 30-3. The communicator 210 may transmit the previously acquired additional information to the terminal apparatus corresponding to a command of the controller 240.

The controller 240 may transmit the previously acquired additional information to the corresponding terminal apparatus or other terminal apparatuses in consideration of the user's attention or interest in the video content which the user is watching through the corresponding terminal apparatus.

According to an exemplary embodiment, the first to third terminal apparatuses 30-1 to 30-3 may be registered in connection with the user to whom the additional information services will be provided. Among those, the first terminal apparatus 30-1 may be predetermined as the main terminal apparatus. Therefore, the controller 240 determines whether the video content is output from the first terminal apparatus 30-1 which is predetermined as the main terminal apparatus. If it is determined that the video content is output from the first terminal apparatus 30-1, the controller 240 analyzes at least one of the genre of the video content output from the first terminal apparatus 30-1 and the output state of the corresponding video content. If it is determined that the genre of the video content is a first genre or an output duration time of the corresponding video content is greater than or equal to a preset threshold time, the controller 240 may determine that the concentration of the user on the video content which the user is watching through the first terminal apparatus 30-1 is high. Here, the first genre may be an arbitrarily preset genre or a genre which is determined as a genre of interest of the user.

If it is determined that the concentration on the video content is high, the controller 240 may control the communicator 210 to output the previously acquired additional information to one of the second and third terminal apparatuses 30-2 and 30-3. The communicator 210 transmits the additional information to the terminal apparatus corresponding to the control command of the controller 240.

Therefore, the user may receive the additional information in which the user is interested or the additional information corresponding to a specific field in which the corresponding user is interested through one of the second and third terminal apparatuses 30-2 and 30-3 in connection with the corresponding video content while watching the video content through the first terminal apparatus 30-1.

Meanwhile, if the genre of the video content output from the first terminal apparatus 30-1 is a second genre or the output duration time of the corresponding video content is less than the preset threshold time, the controller 240 may determine that the concentration of the user on the video content which the user is watching through the first terminal apparatus 30-1 is low. In addition, when the user is recognized less than the preset threshold period of time, the controller 240 may determine that the concentration of the user on the video content which the user is watching through the first terminal apparatus 30-1 is low.

As such, if it is determined that the concentration of the user is low, the controller 240 may control the communicator 210 to output only the additional information on audio data of video and audio data included in the previously acquired additional information to the first terminal apparatus 30-1. However, one or more exemplary embodiments are not limited thereto and the controller 240 may control the communicator 210 to output the additional information including the video and audio data to the first terminal apparatus 30-1. As such, the communicator 210 may transmit the additional information including at least one of the video and audio data to the first terminal apparatus 30-1 according to the control command.

Therefore, the first terminal apparatus 30-1 may output the additional information transmitted from the electrical apparatus 10 along with the video content.

According to another exemplary embodiment, the controller 240 may determine an operation state of the first terminal apparatus 30-1, which is predetermined as the main terminal apparatus, and, if it is determined that the first terminal apparatus 30-1 is deactivated, may control the communicator 210 to output the previously acquired additional information to one of the second and third terminal apparatuses 30-2 and 30-3. In detail, the controller 240 determines the operation state of the first terminal apparatus 30-1 to determine whether the first terminal apparatus 30-1 is in a standby mode or is in a turned off state. If it is determined that the first terminal apparatus 30-1 is in the standby mode or is in the turned off state, the controller 240 determines that the first terminal apparatus 30-1 is deactivated and may control the communicator 210 to output the previously acquired additional information to one of the second and third terminal apparatuses 30-2 and 30-3. The communicator 210 may transmit the additional information to the terminal apparatus corresponding to the control command of the controller 240.

After the additional information is transmitted to at least one of the first to third terminal apparatuses 30-1 to 30-3, the user selection command for the additional information is received from the corresponding terminal apparatus or a remote control apparatus, such as a remote controller, the controller 240 updates the preference information included in the context information of the user which is an additional information service providing object. Therefore, the controller 240 provides additional information predicted as being preferred by the corresponding user based on the context information including the updated preference information at a time of providing another additional information in connection with the corresponding user, thereby improving an accuracy of the additional information provided based on the user interest and a surrounding situation.

The foregoing electrical apparatus 10 may be implemented as the display apparatus 200 combined with one of the first to third terminal apparatuses 30-1 to 30-3.

FIG. 3 is a block diagram of a display apparatus according to an exemplary embodiment.

The display apparatus 200 illustrated in FIG. 3 may be a terminal apparatus from which the video content may be output, together with an operation the components of the electrical apparatus 10. In this case, the display apparatus 200 may include the communicator 210, the extraction unit 220, the storage 230, and the controller 240, which are similar to the components of the electrical apparatus 10, and may further include an output unit 250, a photographing unit 260, and an input unit 270, e.g., a receiver, a mouse, a keyboard, a touch pad, and a user interface.

The communicator 210, the extraction unit 220, the storage 230, and the controller 240 have been described with reference to FIG. 2.

The output unit 250 may output video and audio of the video content requested by the user or at least one of video and audio of the additional information corresponding to the object of interest of the user depending on the control command of the controller 240. The output unit 250 may include a video output unit 251, e.g., a display or a projector, and an audio output unit 253, e.g., a speaker or an audio jack. The video output unit 251 displays the video data included in the video content, on the display. Further, the audio output unit 253 outputs the audio data included in the video content, through a speaker as an audio signal.

The display may be implemented as a liquid crystal display (LCD), an organic light emitting display (OLED), a plasma display panel (PDP), or the like, and may be implemented as a touch screen layered with a touch pad to receive a touch command of the user.

The photographing unit 260 captures an image using a camera equipped in the display apparatus 200. The photographing unit 260 may perform a photographing operation when the display apparatus 200 is in a standby mode or an active mode.

When the extraction unit 220 extracts the plurality of keywords from the server 20 based on the received source data, the controller 240 may detect the context information of the user to whom the additional information service is provided based on the image of the user captured by the photographing unit 260. The storage 230 may store the context information including at least one of the profile information, the preference information, and the viewing history information for multiple users. Here, the profile information for each user may include at least one of speech information and face image information in consideration of an age and a sex of each user. The controller 240 may detect the context information including the profile information of the user matching the image of the user captured by the photographing unit 260 based on the face image information included in the profile information stored in the storage 230.

The input unit 270 is an input means which receives various user commands and transfers the received commands to the controller 240 and may be implemented as a touch pad, a key pad including various keys such as a function key, a numerical key, a special key, and a character key, or a touch screen. In addition, the input unit 270 may receive user's speech through a microphone. When the utterance speech of the user is received through the input unit 270, the controller 240 may detect the context information including the profile information of the user matching the speech of the user input through the input unit 270 based on the speech information included in the profile information for multiple users stored in the storage 230.

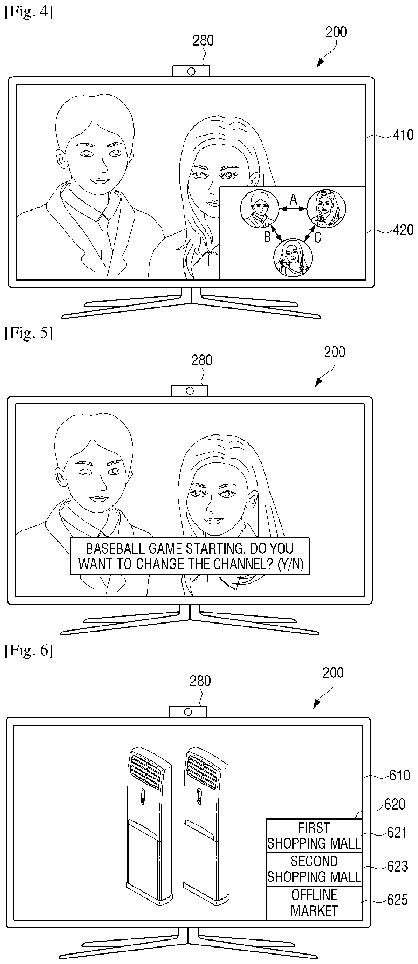

FIG. 4 is a diagram illustrating providing additional information on video content from the display apparatus according to an exemplary embodiment.

As illustrated in FIG. 4, the display apparatus 200 may display a television show requested by a user on a screen. When the show is displayed, the extraction unit 220 may extract keywords from the source data including at least one of data including at least one of video, audio, and subtitles of the corresponding show, SNS, and a web document, among the source data received from the server 20. According to an exemplary embodiment, the extraction unit 220 may extract keywords such as characters, a synopsis, viewer ratings, and a relationship diagram between characters from the source data associated with the displayed show.

The controller 240 identifies a user watching the show and detects the context information on the identified user. According to an exemplary embodiment, the controller 240 may identify a user based on an image captured by a camera 280 provided at an upper end of the screen of the display apparatus 200. In detail, the controller 240 may compare the image captured by the camera 280 with the face image information included in the stored profile information for multiple users to identify the user and detect the context information of the identified user. When the context information is detected, the controller 240 may use at least one of the profile information, the preference information, and the viewing history information included in the detected context information to determine the keywords associated with the object of interest of the user among the plurality of previously extracted keywords.

According to an exemplary embodiment, the controller 240 may determine whether the user has previously watched the show which is now being displayed based on the viewing history information included in the previously detected context information. In this case, the controller 240 may determine related keywords in a relationship diagram between characters appearing in the corresponding show among the plurality of previously extracted keywords as keywords belonging to the object of interest of the corresponding user in consideration of present conditions. When the keywords are determined, the controller 240 receives additional information 420 which represents a relationship diagram between characters of the show from the server 20 and displays the received additional information 420 in one region of the screen.

When the show is a preset first genre, the controller 240 may transmit the additional information 420 representing the relationship diagram between the characters of the show which the user is watching to other terminal apparatuses which are registered in connection with the corresponding user.

Therefore, the user may confirm who the characters appearing in the show are and understand the relationships between the characters, based on the additional information 420 which is displayed on the screen of the display apparatus 200 or screens of other terminal apparatuses.

FIG. 5 is a diagram illustrating providing video content belonging to an object of interest of a user from the display apparatus according to the exemplary embodiment.

As illustrated in FIG. 5, the display apparatus 200 may display a show 510 provided from a first channel on a screen. The first channel may be a channel requested by a user or may be a channel set before the display apparatus 200 is turned off. Therefore, when the channel command for the first channel is input or the power supply is turned on, the display apparatus 200 may display the show 510 provided from the first channel on the screen.

In the state in which the show of the first channel is displayed, the controller 240 may identify the user who watches the show 510 based on the image captured by the camera 280 and detect the context information on the identified user among the stored context information for multiple users.

When the context information is detected, the controller 240 may determine a field corresponding to an object of interest of the user who is watching the show based on at least one of preference information and viewing history information included in the detected context information. For example, when the user who is watching the show 510 primarily watches baseball games, the preference information may include baseball team information, baseball league information, baseball player information, and the like, and the viewing history information may include watching information on the video content for each channel of the corresponding user.

Therefore, the controller 240 may analyze which baseball league the user prefers, which baseball team the user prefers, the channel on which the user usually watches baseball games, and the like, based on the preference information and the viewing history information. When the user prefers a major league game and mainly watches games of a first baseball team, the controller 240 searches for a plurality of channels to determine whether a channel providing a game of the first baseball team is available. As the determination result, when the game of the first baseball team which the user prefers is provided through the second channel, the controller 240 generates and outputs a guide message which guides a channel change to a second channel. For example, a guide message 520 which says "Baseball game starting. Do you want to change the channel? (Y/N)" is displayed on the screen of the display apparatus 200. When an event in connection with a channel change is generated in the state in which the guide message 520 is displayed, the display apparatus 200 performs a channel change from the first channel to the second channel. Therefore, it is possible to allow the user to frequently confirm in advance when a game of a baseball team which the user wants to watch starts, change the channel when a game of a baseball team which the user prefers starts, or the like.

FIG. 6 is a diagram illustrating providing product purchase information belonging to the object of interest of the user from the display apparatus according to an exemplary embodiment.

As illustrated in FIG. 6, the display apparatus 200 may display video content associated with a home shopping network 610 provided from the first channel. In the state in which the video content associated with the home shopping network 610 is displayed, the controller 240 may identify the user who watches the home shopping network 610 based on the image captured by the camera 280 and detect the context information on the identified user among stored context information for multiple users.

When the context information is detected, the controller 240 may collect product related information corresponding to the object of interest of the user watching the home shopping 610 based on at least one of the preference information and the viewing history information included in the detected context information. For example, when the user who is watching the home shopping network 610 mainly watches content associated with home appliances, the preference information of the corresponding user may include purchase history information of which products the user purchases through the home shopping network. Further, the viewing history information may include the watching information on video content for each channel of the corresponding user.

The controller 240 may analyze a product type, a purchase history, and the like which the user is watching through the home shopping network based on the preference information and the viewing history information. When the user mainly watches electronic products or has only purchased electronic products through the corresponding home shopping network, the controller 240 acquires purchase information on products advertised through the home shopping network 610 which the user is now watching from the server 20. When the purchase information is acquired, the controller 240 may display a purchase information list 620 based on the acquired purchase information in one region of the screen on which the video content associated with the home shopping network 610 is displayed. The purchase information list 620 may be information on first and second online shopping malls 621 and 623 and an offline market 625 through which products now advertised through the home shopping network 610 are sold. When the purchase information list 620 is displayed and a selection command for at least one of the first and second online shopping malls 621 and 623 and the offline market 625 included in the purchase information list 620 is input, the controller 240 may acquire the shopping mall or market related information corresponding to the selection command from the server 20 and display the acquired shopping mall or market related information on the screen.

Therefore, the user may more conveniently confirm the purchase information on the corresponding products without performing a separate search in connection with products advertised through the home shopping network 610.

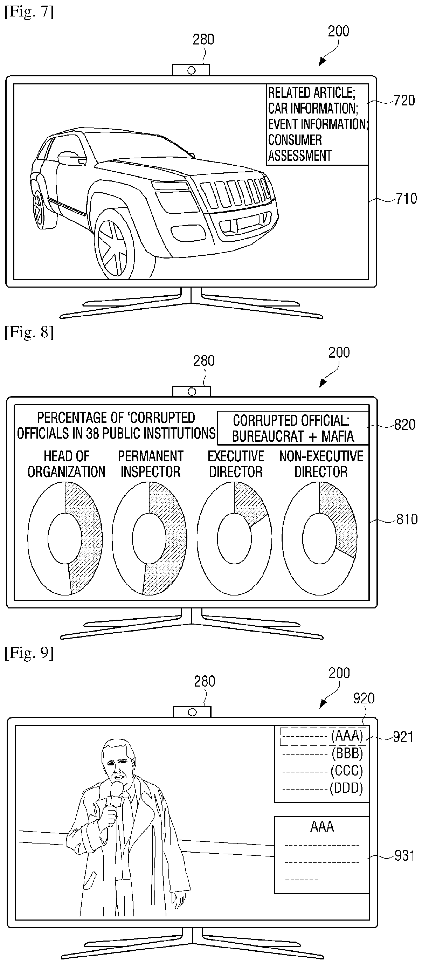

FIG. 7 is a diagram illustrating providing additional information on the video content belonging to the object of interest of the user from the display apparatus according to an exemplary embodiment.

As illustrated in FIG. 7, the display apparatus 200 may display a show provided from a first channel on a screen. When the show is displayed, the controller 240 may identify the user who watches a show based on the image captured by the camera 280 and detect the context information on the identified user among stored context information for multiple users.

When the context information is detected, the controller 240 may determine the keywords associated with the object of interest of the corresponding user among a plurality of keywords extracted by the extraction unit 220 based on at least one of preference information and viewing history information included in the detected context information and may acquire the additional information associated with the corresponding keywords from the server 20 based on the determined keywords. For example, when a user who watches a show is very interested in cars, the preference information may include car model information which the corresponding user prefers, search scheme information, and the like, and the viewing history information may include watching information on a channel through which car related information is provided.

Therefore, when an image for a car 710 appears on a show, the controller 240 may determine keywords for the car 710 among the plurality of keywords extracted by the extraction unit 220 based on the preference information and the viewing history information of the user and acquire the additional information associated with the car 710 from the server 20 based on the detected keywords.

In this case, the controller 240 may acquire the additional information associated with the car 710 in consideration of the keywords which are frequently extracted or frequency searched for through the SNS, the web document, and the like in connection with the car 710 appearing on the show among the plurality of keywords extracted by the extraction unit 220.

For example, when the object of interest of the user is car information on price, fuel efficiency, and the like, the controller 240 may acquire only the additional information for the car information on the car 710 appearing on the show based on the preference information and the viewing history information included in the context information of the user.

However, the controller 240 may acquire the car information on the car 710 appearing on the show and various additional information 720, such as a car-based event, e.g., a race or an auto show, a related article, consumer assessment, and the like.

When the additional information is acquired, the controller 240 may display the additional information 720 on the corresponding car 710 in one region of the screen. Therefore, the user may confirm the car information in which he / she is interested in, and additional information 720 (event, related article, consumer assessment) corresponding to the car 710 in real time.

FIG. 8 is a diagram illustrating providing additional information depending on characteristics of the video content belonging to the object of interest of the user from the display apparatus according to an exemplary embodiment.

As illustrated in FIG. 8, the display apparatus 200 may display video content associated with news 810 provided from the first channel on the screen. In the state in which the news 810 is displayed, the controller 240 may identify the user who watches the news based on an image captured by the camera 280 and detect the context information on the identified user among the stored context information for multiple users.

When the context information is detected, the controller 240 may analyze the object of interest of the user who is watching the news 810 based on at least one of the preference information and the viewing history information included in the detected context information. For example, the viewing history information may include playback time information on the news 810 which the corresponding user is watching.

The controller 240 may determine whether the user is watching the news beyond a preset threshold time based on the play time information. If it is determined that the user is watching the news beyond the preset threshold time, the controller 240 determines that the news 810 is the object of interest of the user and analyzes at least one of video, audio, and subtitles of the news 810 to be able to determine a keyword for providing the additional information. In this case, the controller 240 may determine the search scheme for providing the additional information depending on the characteristics of keywords for providing the additional information.

According to an exemplary embodiment, the controller 240 may determine the phrase 'corrupted official' from subtitles of the news 810 displayed on the screen as a keyword for providing additional information. When the keyword is determined, the controller 240 determines that the corresponding keyword is the keyword for providing the additional information as a definition and acquires the dictionary definition called 'corrupted official' from the server 20 as the additional information 820 and displays the acquired additional information 820 on the screen.

Therefore, the user refers to the additional information 820 displayed on the screen to be able to more easily understand the meaning of the phrase 'corrupted official' which is mentioned in the news 810.

FIG. 9 is a diagram illustrating providing additional information depending on characteristics of video content belonging to an object of interest of a user from a display apparatus according to another exemplary embodiment.

As illustrated in FIG. 9, the display apparatus 200 may display news related video content provided from the first channel on the screen and the user may watch the corresponding news beyond the preset threshold time. In this case, the controller 240 determines that the news is the object of interest of the user and analyzes at least one of video, audio, and subtitles of the corresponding news to be able to determine a keyword for providing additional information. In this case, the controller 240 may determine the search scheme for providing the additional information depending on the characteristics of keywords for providing the additional information.

For example, the user may watch video of an accident 910 through the news displayed on the screen. When the accident video 910 is displayed, the controller 240 may determine the keyword associated with the accident 910 as the keyword for providing the additional information. When the keyword is determined, if the controller 240 analyzes the predetermined keyword in connection with the accident 910 to determine that the corresponding keyword is an issue related keyword, the controller 240 acquires additional information of news articles associated with the corresponding accident video 910 and displays a news article list 920 in a first region on the screen based on the acquired additional information. When the news article list 920 is displayed and a selection command is input to a news article of a first press 921, the controller 240 displays a news article 931 from a first source 921 in a second region on the screen.

Therefore, the user may watch the accident video 910 provided through the news which he / she is now watching and may view the news articles provided from multiple presses in real time.

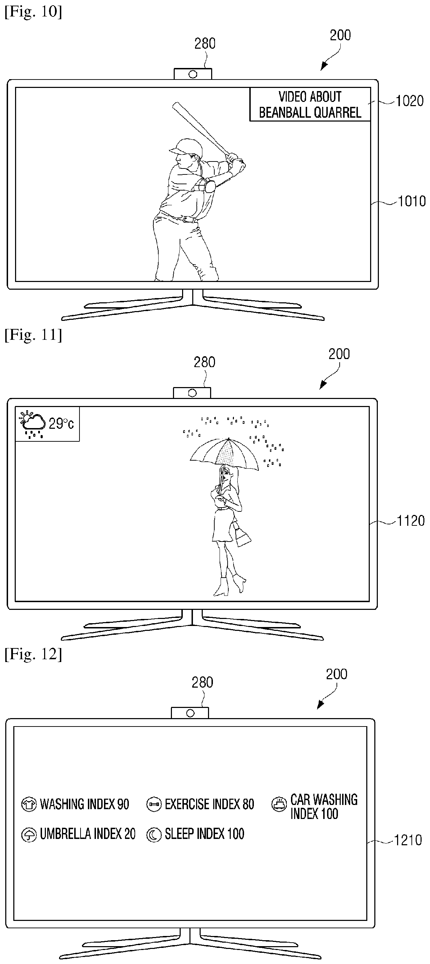

FIG. 10 is a diagram illustrating providing additional information depending on the characteristics of the video content belonging to the object of interest of the user from the display apparatus according to another exemplary embodiment.

As illustrated in FIG. 10, the display apparatus 200 may display baseball game 1010 related video content provided from the first channel on the screen and may determine that the baseball game 1010 which is now being played is the object of interest of the user.

In this case, the controller 240 may determine keywords for a baseball player of whom the user is fond from among a plurality of keywords associated with the corresponding baseball game 1010 based on the preference information included in the context information of the user as keywords provided as additional information. In this case, the controller 240 may determine the search scheme for providing the additional information depending on the characteristics of keywords for providing the additional information.

According to an exemplary embodiment, when a genre which the user is now watching is sports, the controller 240 may acquire additional information of videos in connection with keywords which are determined in connection with the baseball player of whom the user is fond. When the additional information is acquired, the controller 240 displays a video play menu 1020 which represents "Videos about a beanball quarrel" in a first region of the screen based on the acquired additional information. When the video play menu 1020 is displayed and a selection command of the user is input, the controller 240 displays the video in the first region.

Therefore, the user may simultaneously watch the baseball game which is displayed in the display apparatus 200 and the videos in connection with a player of whom he/ she is fond.

FIG. 11 is a diagram illustrating providing first additional information corresponding to user interest from the display apparatus according to an exemplary embodiment in a standby mode, and FIG. 12 is a diagram illustrating providing second additional information corresponding to user's interest information from the display apparatus according to another exemplary embodiment in a standby mode.

As illustrated in FIGS. 11 and 12, the display apparatus 200 may determine the object of interest of the user based on the context information of the user and may provide weather related additional information based on the determined object of interest.

According to an exemplary embodiment, the controller 240 periodically acquires time information and determines whether the present time belongs to a preset time region based on the acquired time information. If it is determined that the present time belongs to the preset time region, the controller 240 extracts a weather related keyword from the source data received from the server 20. For example, when the preset time region is between 7 and 8 in the morning and the present time is 7:30 am, the controller 240 may extract the weather related keyword by referring to the source data received from the server 20. When the weather related keyword is extracted, the controller 240 determines whether the user is present near the display apparatus 200 based on the image captured by the camera 280.

If it is determined that the user is present, the controller 240 may identify the user who is present around the display apparatus 200 based on the captured image and detect the context information on the identified user among stored context information for multiple users. When the context information is detected, the controller 240 may analyze the object of interest of the corresponding user in connection with weather, based on at least one of the preference information and the viewing history information included in the detected context information. For example, if the identified user is a woman and the preference information of the corresponding user may include history information providing weather related additional information to the corresponding user, fashion related search history information, and the like, and the viewing history information may include watching information on a channel through which fashion related shopping and fashion information are provided.

In this case, the controller 240 may determine that the object of interest of the corresponding user is fashion and may acquire the additional information on apparel coordination for weather from the server 20 based on the previously extracted weather related keyword. For example, if it is determined that it will rain today and the daytime maximum temperature is 29 ?C based on the keywords extracted in connection with the weather, the controller 240 may acquire additional information on apparel coordination associated with the corresponding weather from the server 20.

Meanwhile, when the user is not present around the display apparatus 200 or it is difficult to extract the object of interest associated with weather from the context information of the identified user, the controller 240 may acquire the additional information corresponding to the predetermined general object of interest conditions from the server 20 based on the previously extracted weather related keyword. For example, if it is determined that the weather is fair today and daytime maximum temperature is 29 ?C based on the keywords extracted in connection with the weather, the controller 240 may acquire additional information on a life index associated with the corresponding weather from the server 20 (FIG. 12). Here, the life index may include at least one of washing index, exercise index, car washing index, umbrella index, sleep index, and the like.

When the additional information is acquired based on the weather related keywords, the controller 240 determines the operation mode of the display apparatus 200. If it is determined that the display apparatus 200 is operated in a deactivated mode such as a standby mode, the controller 240 may change the mode of the display apparatus 200 to an active mode to display the additional information on the previously acquired apparel coordination 1120 or the life index 1210 on the screen. Therefore, the user may select clothes for going out by referring to the weather related apparel coordination 1120 displayed on the screen of the display apparatus 200 and may plan about what he / she has to do today by referring to the weather related life index 1210.

When the additional information on the apparel coordination 1120 or the life index 1210 is displayed on the screen and a control command of the user for the activation operation of the display apparatus 200 is not input for a preset threshold time, the controller 240 may change the operation mode of the display apparatus 200 from the active mode to the standby mode.

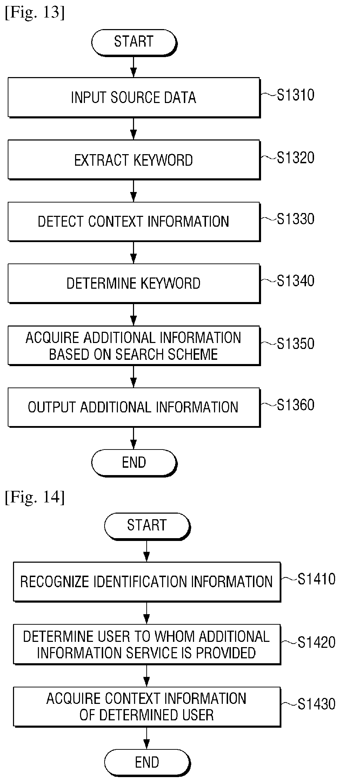

FIG. 13 is a flow chart of a method for preemptively providing information corresponding to an object of interest of a user from the electrical apparatus according to an exemplary embodiment.

As illustrated in FIG. 13, when source data received from the external source 20 is input, the electrical apparatus 10 extracts keywords from the input source data (S1310 and S1320). The server 20 may be at least one of a content providing server which provides the video content, a web server which provides web documents, and a social network service (SNS) server which provides the social network service. The source data received from the server 20 may be the web documents and the SNS provided from the web server and the SNS server or data for video content provided from the content providing server. Here, the data for video content may include at least one of video, audio, and subtitles.

When the plurality of keywords are extracted, the electrical apparatus 10 detects the context information of the user to whom the additional information service associated with the plurality of previously extracted keywords among the stored context information of multiple users is provided (S1330). The method for detecting context information of a user to whom the additional information services are provided will be explained with reference to FIG. 14.

FIG. 14 is a flow chart for detecting user's context information from the electrical apparatus according to the exemplary embodiment.

As illustrated in FIG. 14, the electrical apparatus 10 recognizes the identification information of the user to whom the additional information services will be provided and determines to which user the additional information services are provided based on the recognized identification information (S1410 and S1420). Next, the electrical apparatus 10 acquires the context information of the user to whom the additional information services among the context information for multiple users are provided (S1430).

According to an exemplary embodiment, the electrical apparatus 10 may receive the identification information including at least one of the image of the user, the speech of the user, and password information from at least one of the registered first to third terminal apparatuses 30-1 to 30-3 or internally acquire the identification information of the user. When the identification information is received or acquired, the electrical apparatus 10 may identify the user to whom the additional service information is provided based on the profile information included in the stored context information for multiple users, and may detect the context information of the identified user.

In detail, the context information for multiple users which is stored in the electrical apparatus 10 may include at least one of profile information, preference information, viewing history information, surrounding environment information, such as people present, lighting, and noise levels, search history information, and reaction history information to previously provided additional information. Here, the profile information may include at least one of the speech information and the face image information in consideration of an age and a sex of the user and the preference information may be genre information on video content which the user prefers, the reaction history to the additional information previously provided in connection with the keywords belonging to the object of interest of the user, the keyword search history of the user, and the like. Further, the viewing history information may be a viewing history, a viewing duration time history, and the like for video content for each channel.

Therefore, the electrical apparatus 10 may identify the user to whom the additional services are provided by comparing at least one of the face image information, the password information, and the speech information included in the stored profile information for multiple users with the corresponding identification information and detect the context information of the identified user.

Referring to FIG. 13, if the context information of the user to whom the additional information services are provided is detected, the electrical apparatus 10 determines the keywords associated with the object of interest of the corresponding user among the plurality of previously extracted keywords based on the detected context information (S1340). In this case, the electrical apparatus 10 may further determine at least one of keywords which are frequently extracted and keywords which are frequently searched for among the plurality of previously extracted keywords as the keyword of the user to whom the additional information services are provided.

When the keywords are determined, the electrical apparatus 10 acquires the additional information from the server 20 based on the keywords previously determined in connection with the object of interest of the user to whom the additional information services are provided (S1350). Here, the additional information may be processed information in connection with keywords associated with the object of interest of the user. In detail, the electrical apparatus 10 determines a search scheme for the additional information on the corresponding keyword in connection with the context information of the user to whom the additional information services will be provided and the predetermined keyword. Next, the electrical apparatus 10 receives the additional information associated with the keywords based on the predetermined search scheme. Therefore, the electrical apparatus 10 may acquire the additional information predicted as being preferred by the corresponding user based on the keywords determined in connection with the object of interest of the user.

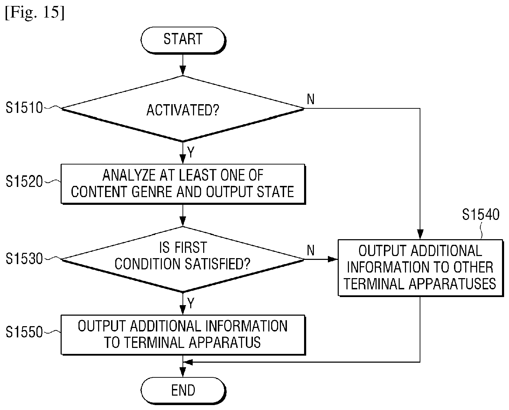

When the additional information is acquired, the electrical apparatus 10 outputs the acquired additional information to the corresponding terminal apparatus so that the previously acquired additional information is displayed on the terminal apparatus associated with the user to whom the additional services are provided (S1360). Hereinafter, a method for outputting previously acquired additional information from the electrical apparatus 10 to the terminal apparatus associated with the user to whom the additional information services are provided will be described in detail with reference to FIG. 15.

FIG. 15 is a flow chart of a method for outputting additional information associated with the object of interest of the user from the electrical apparatus according to an exemplary embodiment.

As illustrated in FIG. 15, when the additional information associated with the object of interest of the user to whom the additional information services are provided is acquired, the electrical apparatus 10 determines whether the operation mode of the first terminal apparatus 30-1 predetermined as the main terminal apparatus of the registered first to third terminal apparatuses 30-1 to 30-3 associated with the corresponding user is in the active mode (S1510). If it is determined that the operation mode of the first terminal apparatus 30-1 is in the active mode, the electrical apparatus 10 analyzes at least one of the genre of the content output from the first terminal apparatus 30-1 and the output state of the corresponding content (S1520). If it is determined that a first condition is satisfied, the electrical apparatus 10 outputs the additional information to one of the second and third terminal apparatuses 30-2 and 30-3 other than the registered first terminal apparatus 30-1 (S1530). Meanwhile, if it is determined that the first condition is not satisfied, the electrical apparatus 10 outputs the additional information to the first terminal apparatus 30-1 predetermined as the main terminal apparatus (S1540).

Here, the first condition corresponds to a condition in which the genre of the content output from the first terminal apparatus 30-1 is the first genre or the output duration time of the corresponding content is greater than or equal to a preset threshold time. Here, the first genre may be an arbitrarily predetermined genre or a genre which is predetermined by the user to whom the additional information services are provided. Therefore, the electrical apparatus 10 analyzes at least one of the genre of the content output from the first terminal apparatus 30-1 and the output state of the corresponding content and if it is analyzed that the condition corresponds to the first condition in which the genre of the content output from the first terminal apparatus 30-1 is the predetermined first genre or the output duration time of the corresponding content is equal to or more than the preset threshold time, the electrical apparatus 10 outputs the additional information to one of the second and third terminal apparatuses 30-2 and 30-3. Therefore, the user may receive the additional information in which the user is interested or the additional information corresponding to a specific field in which the corresponding user is interested through one of the second and third terminal apparatuses 30-2 and 30-3 in connection with the corresponding video content while watching the video content through the first terminal apparatus 30-1.

Meanwhile, if the genre of the content output from the first terminal apparatus 30-1 is the second genre or the output duration time of the corresponding content is less than the preset threshold time, the electrical apparatus 10 may determine that the concentration of the user on the video content which the user is watching through the first terminal apparatus 30-1 predetermined as the main terminal apparatus is low. In addition, when the user to whom the additional information services are provided through the camera of the first terminal apparatus 30-1 is recognized as less than the preset threshold time, the electrical apparatus 10 may determine that the concentration of the user on the video content which the user is watching through the first terminal apparatus 30-1 is low. As such, if it is determined that the concentration of the user on the video content which the user is watching through the first terminal apparatus 30-1 is low, the electrical apparatus 10 outputs the additional information to the first terminal apparatus 30-1.

Therefore, the user watches the video content through the first terminal apparatus 30-1 and may receive the additional information in which the user is interested or the additional information corresponding to the specific field in which the corresponding user is interested, in connection with the corresponding video content.

As described above, according to one or more exemplary embodiments, the electrical apparatus or the display apparatus predicts the additional information in which the user is interested and preemptively provides the predicted additional information to be able to provide a variety of information to the user. Further, the display apparatus provides the additional information in which the corresponding user is interested in consideration of the user's situations to maximize the user interest about the corresponding additional information.

Hereinabove, one or more exemplary embodiments are illustrated and described, but the present invention is not limited to the foregoing specific exemplary embodiments, and, therefore, it will be apparent to those skilled in the art that various modifications can be made without departing from the scope of the present invention described in the appended claims.

## Claims

1. A method for providing additional information by an electrical apparatus (10), the method comprising:
receiving first source data from a server and output the first source data to a terminal apparatus (30-1), wherein the terminal apparatus (30-1) displays a content corresponding to the first source data received from the apparatus (10);
extracting at least one keyword from the first source data;
identifying a user viewing the content displayed in the terminal apparatus (30-1) based on identification information stored in the electrical apparatus (10);
detecting context information of the identified user ;
determining at least one keyword from among the extracted at least one keyword based on the detected context information;
acquiring first additional information corresponding to the determined at least one keyword; and
outputting the first additional information to the terminal apparatus (30-1), wherein the terminal apparatus (30-1) displays the first additional information received from the apparatus (10),
**characterized in that** the method further comprises:
in response to a user's reaction to the first additional information displayed in the terminal apparatus, updating reaction history information of the context information based on the user's reaction, and
in response to receiving second source data from the server, extracting at least one keyword from the second source data, determining at least one keyword from among the extracted at least one keyword based on the reaction history information, acquiring second additional information corresponding to the determined at least one keyword and outputting the second additional information to the terminal apparatus (30-1).

2. The method as claimed in claim 1, wherein:
the source data comprises at least one from among data of a social network service (SNS), a web document, and video content; and
wherein the source data for the video content comprises at least one of video data, audio data, and subtitles.

3. The method as claimed in claim 1, wherein the detecting comprises:
recognizing identification information of the user;
identifying the user to whom the additional information is to be provided based on the recognized identification information; and
detecting the context information of the identified user.

4. The method as claimed in claim 3, wherein the context information comprises at least one of:
profile information of the user, preference information of the user, viewing history information of the user, surrounding environment information, search history information of the user, or reaction history information corresponding to the user's reaction to previously provided additional information,
profile information, preference information, or viewing history information of other users corresponding to the user to whom the additional information is to be provided, and
present time information.

5. The method as claimed in claim 1, wherein the determining comprises determining at least one of at least one frequently extracted keyword and at least one frequently searched for keyword from among the extracted at least one keyword as the at least one keyword corresponding to the object of interest of the user.

6. The method as claimed in claim 1, wherein the acquiring comprises:
determining a search scheme for the additional information based on at least one of the determined at least one keyword, the detected context information, and characteristics of the extracted at least one keyword; and
acquiring the additional information based on the determined search scheme.

7. The method as claimed in claim 1, wherein the outputting comprises:
analyzing at least one of a genre of video content output from a terminal apparatus and an output state of the video content; and
outputting, in response to, as a result of the analyzing, the genre of the video content being determined to be a first genre or an output duration time of the video content being determined to be greater than or equal to a threshold period of time, the additional information to another terminal apparatus registered in connection with the user.

8. The method as claimed in claim 7, wherein the outputting further comprises outputting, in response to, as a result of the analyzing, the genre of the video content being determined to be a second genre, the user being recognized less than the threshold period of time, or the output duration time of the video content being determined to be less than the threshold period of time, voice data related to the additional information to the terminal apparatus (S1550).

9. The method as claimed in claim 7, further comprising determining an operation state of the terminal apparatus,
wherein the outputting of the additional information comprises outputting, in response to determining that the terminal apparatus is in a deactivated state, the additional information to the another terminal apparatuses registered in connection with the user.

10. The method as claimed in claim 1, wherein:
the outputting comprises outputting the acquired additional information to a terminal apparatus, the context information comprises preference information, and
the method further comprises updating the preference information in response to a user selection command for the additional information being input to the terminal apparatus.

11. An apparatus (10), comprising:
a communicator (210);
a storage (230) configured to store context information of a user and identification information of the user; and
a controller (240) configured to:
control the communicator to receive first source data from a server and output the first source data to a terminal apparatus (30-1), wherein the terminal apparatus (30-1) displays a content corresponding to the first source data received from the apparatus (10),
extract at least one keyword from the first source data,
identify a user viewing the content displayed in the terminal apparatus (30-1) based on the identification information,
detect, from the storage, context information of the identified user,
determine at least one keyword from among the extracted at least one keyword based on the detected context information,
acquire first additional information corresponding to the determined at least one keyword, and
control the communicator (210) to output the first additional information to the terminal apparatus (30-1), wherein the terminal apparatus (30-1) displays the additional information received from the apparatus (10),
**characterized in that** the controller (240) is further configured to:
in response to a user's reaction to the first additional information displayed in the terminal apparatus (30-1), update reaction history information of the context information based on the user's reaction, and
in response to receiving second source data from the server, extract at least one keyword from the second source data, determine at least one keyword from among the extracted at least one keyword based on the reaction history information, acquire second additional information corresponding to the determined at least one keyword and output the second additional information to the terminal apparatus (30-1).

12. The apparatus (10) as claimed in claim 10, wherein:
the source data comprises at least one of social network service (SNS) data, a web document, and data for video content, and
the data for video content comprises at least one of video data, audio data, and subtitles.

13. The apparatus (10) as claimed in claim 10, wherein the controller (240) is further configured to recognize identification information of the user, and identify the user based on the recognized identification information.

14. The apparatus (10) as claimed in claim 12, wherein the context information comprises at least one of:
profile information of the user, preference information of the user, viewing history information of the user, surrounding environment information, search history information of the user, or reaction history information corresponding to the user's reaction to previously provided additional information,
profile information, preference information, or viewing history information of other users corresponding to the user to whom the additional information is to be provided, and
present time information.

15. The apparatus (10) as claimed in claim 10, wherein the controller (240) is further configured to determine at least one of at least one frequently extracted keyword and at least one frequently searched for keyword among the extracted at least one keyword as the at least one keyword corresponding to the object of interest of the user.

## Patentansprüche

1. Verfahren zum Bereitstellen von Zusatzinformationen durch eine elektrische Einrichtung (10), wobei das Verfahren Folgendes umfasst:
Empfangen erster Quellendaten von einem Server und Ausgeben der ersten Quellendaten an eine Endgeräteeinrichtung (30-1), wobei die Endgeräteeinrichtung (30-1) einen Inhalt anzeigt, der den ersten Quellendaten entspricht, die von der Einrichtung (10) empfangen werden;
Extrahieren wenigstens eines Schlüsselworts aus den ersten Quellendaten;
Identifizieren eines Nutzers, der den Inhalt betrachtet, der auf der Endgeräteeinrichtung (30-1) angezeigt wird, basierend auf Identifikationsinformationen, die in der elektrischen Einrichtung (10) gespeichert sind;
Detektieren von Kontextinformationen des identifizierten Nutzers;
Bestimmen wenigstens eines Schlüsselworts aus dem extrahierten wenigstens einen Schlüsselwort basierend auf den detektierten Kontextinformationen;
Erfassen erster Zusatzinformationen, die dem bestimmten wenigstens einen Schlüsselwort entsprechen; und
Ausgeben der ersten Zusatzinformationen an die Endgeräteeinrichtung (30-1), wobei die Endgeräteeinrichtung (30-1) die ersten Zusatzinformationen anzeigt, die von der Einrichtung (10) empfangen werden,
**dadurch gekennzeichnet, dass** das Verfahren ferner Folgendes umfasst:
reagierend auf eine Reaktion eines Nutzers auf die ersten Zusatzinformationen, die auf der Endgeräteeinrichtung angezeigt werden, Aktualisieren von Reaktionsverlaufsinformationen der Kontextinformationen basierend auf der Reaktion des Nutzers, und
reagierend auf das Empfangen zweiter Quellendaten von dem Server Extrahieren wenigstens eines Schlüsselworts aus den zweiten Quellendaten, Bestimmen wenigstens eines Schlüsselworts aus dem extrahierten wenigstens einen Schlüsselwort basierend auf den Reaktionsverlaufsinformationen, Erfassen zweiter Zusatzinformationen, die dem bestimmten wenigstens einen Schlüsselwort entsprechen, und Ausgeben der zweiten Zusatzinformationen an die Endgeräteeinrichtung (30-1).

2. Verfahren nach Anspruch 1, wobei:
die Quellendaten Daten eines sozialen Netzwerks (SNS:
Social Network Service) und/oder ein Webdokument und/oder einen Videoinhalt umfassen; und
wobei die Quellendaten für den Videoinhalt Videodaten und/oder Audiodaten und/oder Untertitel umfassen.

3. Verfahren nach Anspruch 1, wobei das Detektieren Folgendes umfasst:
Erkennen von Identifikationsinformationen des Nutzers;
Identifizieren des Nutzers, an den die Zusatzinformationen zu liefern sind, basierend auf den erkannten Identifikationsinformationen; und
Detektieren der Kontextinformationen des identifizierten Nutzers.

4. Verfahren nach Anspruch 3, wobei die Kontextinformationen wenigstens eines von Folgendem umfassen:
Profilinformationen des Nutzers, Präferenzinformationen des Nutzers, Betrachtungsverlaufsinformationen des Nutzers, Umgebungsinformationen,
Suchverlaufsinformationen des Nutzers oder Reaktionsverlaufsinformationen, die der Reaktion des Nutzers auf zuvor bereitgestellte Zusatzinformationen entsprechen,
Profilinformationen, Präferenzinformationen oder Betrachtungsverlaufsinformationen anderer Nutzer, die dem Nutzer entsprechen, an den die Zusatzinformationen zu liefern sind, und
Gegenwartsinformationen.

5. Verfahren nach Anspruch 1, wobei das Bestimmen Bestimmen von wenigstens einem häufig extrahierten Schlüsselwort und/oder wenigstens einem Schlüsselwort, nach dem häufig gesucht wurde, aus dem extrahierten wenigstens einen Schlüsselwort als das wenigstens eine Schlüsselwort, das dem Objekt von Interesse des Nutzers entspricht, umfasst.

6. Verfahren nach Anspruch 1, wobei das Erfassen Folgendes umfasst:
Bestimmen eines Suchschemas für die Zusatzinformationen basierend auf dem bestimmten wenigstens einen Schlüsselwort und/oder den detektierten Kontextinformationen und/oder Charakteristika des extrahierten wenigstens eines Schlüsselworts; und
Erfassen der Zusatzinformationen basierend auf dem bestimmten Suchschema.

7. Verfahren nach Anspruch 1, wobei das Ausgeben Folgendes umfasst:
Analysieren eines Genres eines Videoinhalts, der von einer Endgeräteeinrichtung ausgegeben wird, und/oder eines Ausgabezustands des Videoinhalts; und
Ausgeben der Zusatzinformationen an eine andere Endgeräteeinrichtung, die in Verbindung mit dem Nutzer registriert ist, reagierend darauf, dass als ein Ergebnis des Analysierens das Genre des Videoinhalts als ein erstes Genre bestimmt wird oder eine Ausgabezeitdauer des Videoinhalts als größer oder gleich einer Schwellenzeitperiode bestimmt wird.

8. Verfahren nach Anspruch 7, wobei das Ausgeben ferner Ausgeben von Sprachdaten in Bezug auf die Zusatzinformationen an die Endgeräteeinrichtung reagierend darauf umfasst, dass als Ergebnis des Analysierens das Genre des Videoinhalts als ein zweites Genre bestimmt wird, der Nutzer weniger als die Schwellenzeitperiode erkannt wird oder die Ausgabedauer des Videoinhalts als geringer als die Schwellenzeitperiode bestimmt wird (S1550).

9. Verfahren nach Anspruch 7, das ferner Bestimmen eines Betriebszustands der Endgeräteeinrichtung umfasst,
wobei das Ausgeben der Zusatzinformationen Ausgeben der Zusatzinformationen an die anderen Endgeräteeinrichtungen, die in Verbindung mit dem Nutzer registriert sind, reagierend auf das Bestimmen umfasst, dass sich die Endgeräteeinrichtung in einem deaktivierten Zustand befindet.

10. Verfahren nach Anspruch 1, wobei:
das Ausgeben Ausgeben der erfassten Zusatzinformationen an eine Endgeräteeinrichtung umfasst, wobei die Kontextinformationen Präferenzinformationen umfassen, und
das Verfahren ferner Aktualisieren der Präferenzinformationen reagierend darauf umfasst, dass ein Benutzerauswahlbefehl für die Zusatzinformationen in die Endgeräteeinrichtung eingegeben wird.

11. Einrichtung (10), die Folgendes umfasst:
einen Kommunikator (210);
einen Speicher (230), der zum Speichern von Kontextinformationen eines Nutzers und Identifikationsinformationen des Nutzers konfiguriert ist; und
eine Steuerung (240), die zu Folgendem konfiguriert ist:
Steuern des Kommunikators zum Empfangen erster Quellendaten von einem Server und zum Ausgeben der ersten Quellendaten an eine Endgeräteeinrichtung (30-1), wobei die Endgeräteeinrichtung (30-1) einen Inhalt anzeigt, der den ersten Quellendaten entspricht, die von der Einrichtung (10) empfangen werden,
Extrahieren wenigstens eines Schlüsselworts aus den ersten Quellendaten,
Identifizieren eines Nutzers, der den Inhalt betrachtet, der auf der Endgeräteeinrichtung (30-1) angezeigt wird, basierend auf den Identifikationsinformationen,
Detektieren, aus dem Speicher, von Kontextinformationen des identifizierten Nutzers,
Bestimmen wenigstens eines Schlüsselworts aus dem extrahierten wenigstens einen Schlüsselwort basierend auf den detektierten Kontextinformationen,
Erfassen erster Zusatzinformationen, die dem bestimmten wenigstens einen Schlüsselwort entsprechen, und
Steuern des Kommunikators (210) zum Ausgeben der ersten Zusatzinformationen an die Endgeräteeinrichtung (30-1), wobei die Endgeräteeinrichtung (30-1) die Zusatzinformationen anzeigt, die von der Einrichtung (10) empfangen werden,
**dadurch gekennzeichnet, dass** die Steuerung (240) ferner zu Folgendem konfiguriert ist:
reagierend auf eine Reaktion eines Nutzers auf die ersten Zusatzinformationen, die auf der Endgeräteeinrichtung (30-1) angezeigt werden,
Aktualisieren von Reaktionsverlaufsinformationen der Kontextinformationen basierend auf der Reaktion des Nutzers, und
reagierend auf das Empfangen zweiter Quellendaten von dem Server Extrahieren wenigstens eines Schlüsselworts aus den zweiten Quellendaten, Bestimmen wenigstens eines Schlüsselworts aus dem extrahierten wenigstens einen Schlüsselwort basierend auf den Reaktionsverlaufsinformationen, Erfassen zweiter Zusatzinformationen, die dem bestimmten wenigstens einen Schlüsselwort entsprechen, und Ausgeben der zweiten Zusatzinformationen an die Endgeräteeinrichtung (30-1).

12. Einrichtung (10) nach Anspruch 10, wobei:
die Quellendaten Daten eines sozialen Netzwerks (SNS:
Social Network Service) und/oder ein Webdokument und/oder Daten für einen Videoinhalt umfassen, und
wobei die Daten für den Videoinhalt Videodaten und/oder Audiodaten und/oder Untertitel umfassen.

13. Einrichtung (10) nach Anspruch 10, wobei die Steuerung (240) ferner zum Erkennen von Identifikationsinformationen des Nutzers und zum Identifizieren des Nutzers basierend auf den erkannten Identifikationsinformationen konfiguriert ist.

14. Einrichtung (10) nach Anspruch 12, wobei die Kontextinformationen wenigstens eines von Folgendem umfassen:
Profilinformationen des Nutzers, Präferenzinformationen des Nutzers, Betrachtungsverlaufsinformationen des Nutzers, Umgebungsinformationen, Suchverlaufsinformationen des Nutzers oder Reaktionsverlaufsinformationen, die der Reaktion des Nutzers auf zuvor bereitgestellte Zusatzinformationen entsprechen,
Profilinformationen, Präferenzinformationen oder Betrachtungsverlaufsinformationen anderer Nutzer, die dem Nutzer entsprechen, an den die Zusatzinformationen zu liefern sind, und
Gegenwartsinformationen.

15. Einrichtung (10) nach Anspruch 10, wobei die Steuerung (240) ferner zum Bestimmen von wenigstens einem häufig extrahierten Schlüsselwort und/oder wenigstens einem Schlüsselwort, nach dem häufig gesucht wurde, aus dem extrahierten wenigstens einen Schlüsselwort als das wenigstens eine Schlüsselwort, das dem Objekt von Interesse des Nutzers entspricht, konfiguriert ist.

## Revendications

1. Procédé pour la fourniture d'informations supplémentaires par un appareil électrique (10), le procédé comprenant :
la réception des premières données de source d'un serveur et l'émission des premières données source vers un appareil terminal (30-1), dans lequel l'appareil terminal (30-1) affiche un contenu correspondant aux premières données de source reçues de l'appareil (10) ;
l'extraction d'au moins un mot-clé des premières données de source ;
l'identification d'un utilisateur visualisant le contenu affiché dans l'appareil terminal (30-1) sur la base d'informations d'identification stockées dans l'appareil électrique (10) ;
la détection des informations de contexte de l'utilisateur identifié ;
la détermination d'au moins un mot-clé parmi le mot-clé ou les mots-clés extraits sur la base des informations de contexte détectées ;
l'acquisition de premières informations supplémentaires correspondant à au moins un mot-clé déterminé ; et
l'émission des premières informations supplémentaires à l'appareil terminal (30-1), dans lequel l'appareil terminal (30-1) affiche les premières informations supplémentaires reçues de l'appareil (10),
**caractérisé en ce que** le procédé comprend en outre :
en réponse à la réaction d'un utilisateur aux premières informations supplémentaires affichées dans l'appareil terminal, la mise à jour des informations historiques de réaction des informations de contexte sur la base de la réaction de l'utilisateur, et
en réponse à la réception de secondes données de source du serveur, l'extraction d'au moins un mot-clé des secondes données de source, la détermination d'au moins un mot-clé parmi le ou les mots-clés extraits sur la base des informations historiques de réaction ; l'acquisition de secondes informations supplémentaires correspondant au mot-clé ou aux mots-clés et l'émission des secondes informations supplémentaires à l'appareil terminal (30-1).

2. Procédé selon la revendication 1,
dans lequel les données de source comprennent au moins une parmi des données d'un service de réseau social (SNS), d'un document Web et d'un contenu vidéo ; et
dans lequel les données de source pour le contenu vidéo comprennent au moins une parmi des données vidéo, des données audio et des sous-titres.

3. Procédé selon la revendication 1, dans lequel la détection comprend les opérations suivantes :
la reconnaissance des informations d'identification de l'utilisateur ;
l'identification de l'utilisateur à qui les informations supplémentaires doivent être fournies sur la base d'informations d'identification reconnues ; et
la détection des informations de contexte de l'utilisateur identifié.

4. Procédé selon la revendication 3, dans lequel les informations de contexte comprennent au moins l'une des informations suivantes :
des informations de profil de l'utilisateur, des informations de préférence de l'utilisateur, des informations sur l'historique de l'utilisateur, des informations sur l'environnement des alentours, des informations sur l'historique de recherche de l'utilisateur ou des informations sur l'historique des réactions ;
des informations de profil, des informations de préférence ou des informations d'historique de visualisation d'autres utilisateurs correspondant à l'utilisateur auquel l'information supplémentaire doit être fournie, et
des informations sur l'heure actuelle.

5. Procédé selon la revendication 1, dans lequel la détermination comprend la détermination d'au moins un des mots-clés fréquemment extraits et d'au moins un mot-clé fréquemment recherché parmi le ou les mots-clés extraits en tant qu'au moins un mot-clé correspondant à l'objet d'intérêt de l'utilisateur.

6. Procédé selon la revendication 1, dans lequel l'acquisition détection comprend les opérations suivantes :
détermination d'un schéma de recherche pour les informations supplémentaires sur la base d'au moins l'un parmi le ou les mots-clés déterminés, les informations de contexte détectées et les caractéristiques du ou des mots-clés extraits ; et
acquisition des informations supplémentaires basées sur le schéma de recherche déterminé.

7. Procédé selon la revendication 1, dans lequel la sortie comprend les opérations suivantes :
l'analyse d'au moins un genre de sortie de contenu vidéo à partir d'un appareil terminal et d'un état de sortie du contenu vidéo ; et
la production, en réponse à l'analyse, du genre de contenu vidéo déterminé comme étant un premier genre ou une durée de sortie du contenu vidéo étant déterminée comme étant supérieure ou égale à une période seuil de temps, les informations supplémentaires à un autre appareil terminal étant enregistrées en connexion avec l'utilisateur.

8. Procédé selon la revendication 7, dans lequel l'émission comprend en outre la sortie, en réponse, à la suite de l'analyse, du genre du contenu vidéo déterminé comme étant un deuxième genre, l'utilisateur étant reconnu moins que la période seuil de temps, ou la durée de sortie du contenu vidéo étant déterminée comme étant inférieure à la période seuil de temps, les données vocales étant liées aux informations supplémentaires à l'appareil terminal (S1550).

9. Procédé selon la revendication 7, comprenant en outre la détermination d'un état de fonctionnement de l'appareil terminal,
dans lequel l'émission des informations supplémentaires comprend la sortie, en réponse à la détermination du fait que l'appareil terminal se trouve dans un état désactivé, des informations supplémentaires aux autres appareils terminaux enregistrés en connexion avec l'utilisateur.

10. Procédé selon la revendication 1, dans lequel :
l'émission comprend la sortie des informations supplémentaires acquises vers un appareil terminal, où les informations de contexte comprennent des informations de préférence, et
le procédé comprend en outre la mise à jour des informations de préférence en réponse à une commande de sélection de l'utilisateur pour que les informations supplémentaires soient saisies dans l'appareil terminal.

11. Appareil (10) comprenant :
un communicateur (210) ;
une unité de stockage (230) configurée pour stocker des informations de contexte d'un utilisateur et des informations d'identification de l'utilisateur ; et
un dispositif de contrôle (240) configuré pour :
contrôler la communication de réception des premières données de source d'un serveur et l'émission des premières données source vers un appareil terminal (30-1), dans lequel l'appareil terminal (30-1) affiche un contenu correspondant aux premières données de source reçues de l'appareil (10) ;
extraire au moins un mot-clé des premières données de source ;
identifier un utilisateur visualisant le contenu affiché dans l'appareil terminal (30-1) sur la base des informations d'identification,
détecter, à partir de l'unité de stockage, les informations de contexte de l'utilisateur identifié,
déterminer au moins un mot-clé parmi le mot-clé ou les mots-clés extraits sur la base des informations de contexte détectées,
acquérir des premières informations supplémentaires correspondant à au moins un mot-clé déterminé, et
commander le communicateur (210) pour délivrer les premières informations supplémentaires à l'appareil terminal (30-1), l'appareil terminal (30-1) affichant les informations supplémentaires reçues de l'appareil (10),
**caractérisé en ce que** le dispositif de contrôle (240) est en outre configuré pour :
mettre à jour, en réponse à la réaction d'un utilisateur aux premières informations supplémentaires affichées dans l'appareil terminal (30-1), des informations historiques de réaction des informations de contexte sur la base de la réaction de l'utilisateur, et
en réponse à la réception de secondes données source du serveur, extraire au moins un mot-clé des deuxièmes données source, déterminer au moins un mot-clé parmi les données extraites, au moins un mot-clé basé sur les informations historiques de réaction, acquérir des secondes informations supplémentaires correspondant au mot-clé et aux mots-clés et émettre les secondes informations supplémentaires vers l'appareil terminal (30-1).

12. Appareil (10) selon la revendication 10, dans lequel :
les données de source comprennent au moins un élément parmi : des données d'un service de réseau social (SNS), un document Web et des données pour un contenu vidéo, et
les données de source pour le contenu vidéo comprennent au moins un élément parmi : des données vidéo, des données audio et des sous-titres.

13. Appareil (10) selon la revendication 10, dans lequel le dispositif de contrôle (240) est en outre configuré pour reconnaître les informations d'identification de l'utilisateur, et identifier l'utilisateur sur la base des informations d'identification reconnues.

14. Appareil (10) selon la revendication 12, dans lequel les informations de contexte comprennent au moins l'une des informations suivantes :
des informations de profil de l'utilisateur, des informations de préférence de l'utilisateur, des informations sur l'historique de l'utilisateur, des informations sur l'environnement des alentours, des informations sur l'historique de recherche de l'utilisateur ou des informations sur l'historique des réactions ;
des informations de profil, des informations de préférence ou des informations d'historique de visualisation d'autres utilisateurs correspondant à l'utilisateur auquel l'information supplémentaire doit être fournie, et
des informations sur l'heure actuelle.

15. Appareil (10) selon la revendication 10, dans lequel le dispositif de contrôle (240) est en outre configuré pour la détermination d'au moins un des mots-clés fréquemment extraits et d'au moins un mot-clé fréquemment recherché parmi le ou les mots-clés extraits en tant mot-clé ou mots-clés correspondant à l'objet d'intérêt de l'utilisateur.
